# EUROPÄISCHE PATENTANMELDUNG

(11) **EP 1 705 954 A2**
(43) Veröffentlichungstag der Anmeldung: **27.09.2006**
(21) Anmeldenummer: 06111610.9
(22) Anmeldetag: 23.03.2006
(51) Int. Cl.: H04R 25/02

(54) **Verfahren zur Herstellung einer Hörhilfekomponente und entsprechende Hörhilfekomponente**

(30) Priorität: 24.03.2005 DE 102005013834
(71) Anmelder: Siemens Audiologische Technik GmbH, 91058 Erlangen (DE)
(72) Erfinder: Martin, Raimund, 91330 Eggolsheim (DE)
(74) Vertreter: Berg, Peter

(57) **Zusammenfassung**

Der Tragekomfort eines Hörgeräts oder eines Ohrpassstücks soll gesteigert werden. Dazu ist vorgesehen, ein dreidimensionales Modell (3) dieser Hörhilfekomponente bereitzustellen und eine Negativform der herzustellenden Hörhilfekomponente zu errechnen. Daraus wird eine Spritzgussform (4) für die Hörhilfekomponente ausgebildet. Schließlich wird die Hörhilfekomponente mit Hilfe der Spritzgussform (4) vorzugsweise mit einem elastischen Material gegossen.

## Beschreibung

Die vorliegende Erfindung betrifft ein Verfahren zur Herstellung einer Hörhilfekomponente wie beispielsweise einer Hörgerätschale, eines Teils davon oder einer Otoplastik durch Bereitstellen von CAD-Daten von der dreidimensionalen Form der Hörhilfekomponente. Darüber hinaus betrifft die vorliegende Erfindung eine Gussform zur Herstellung einer derartigen Hörhilfekomponente sowie diese Hörhilfekomponente selbst.

Moderne Herstellungsverfahren für Hörgeräteschalen und Ohrpassstücke bzw. Otoplastiken nutzen CAD-Design-Software und Rapid-Prototyping-Technologien. Ein derartiges Verfahren, mit dem die Otoplastiken oder Ohrpassstücke an die Konturen eines Ohrkanals angepasst werden können, ist aus der europäischen Patentschrift EP 0 516 808 B1 bekannt. Demnach können die äußeren Konturen eines Ohrabdrucks, beispielsweise mit Hilfe von Laserinterferometrie oder einer Videokamera erfasst werden. Daneben besteht auch die Möglichkeit, die Konturen des Ohrkanals durch berührungsloses Abtasten, z. B. durch Ultraschall, zu gewinnen. Die gewonnenen Daten werden digitalisiert und mittels aus der CAD-CAM-Technik bekannter Algorithmen in eine dreidimensionale Computerdarstellung der äußeren Konturen der Otoplastik oder des Ohrpassstücks umgesetzt. Dabei wird das dreidimensionale Computermodell in eine Folge von Querschnitten umgewandelt. Die Otoplastik wird dann dadurch hergestellt, dass die einzelnen Querschnittsebenen nacheinander und übereinander, untereinander oder nebeneinander ausgebildet und dann miteinander verbunden werden. Für diesen Arbeitsschritt kann beispielsweise ein stereolithografisches oder ähnliches Verfahren verwendet werden.

Dieses stereolithografische Verfahren kann beispielsweise so ausgeführt werden, dass auf einer computergesteuerten, bewegbaren Plattform ein Behälter mit aktiviertem, flüssigem Kunstharz angeordnet ist. Durch gezielten Einsatz einer auf die Oberfläche des flüssigen Kunstharzes gerichteten, eine Teilpolymerisation des Kunstharzes bewirkenden Strahlung kann eine erste Querschnittsfläche der Otoplastik erzeugt werden. Anschließend ist es erforderlich, jeweils nach Fertigstellen einer Querschnittsfläche, die Plattform um die Dicke einer Schicht abzusenken, damit die nächste Querschnittsebene auf der Oberfläche des flüssigen Kunstharzes in der gleichen Weise erzeugt werden kann. Dies wird solange fortgesetzt, bis schließlich die mindestens teilweise polymerisierte Plastik dem Behälter entnommen werden kann.

Für derartige Herstellungsverfahren sind nur einige wenige Kunststoffe geeignet. Die Materialeigenschaften dieser Kunststoffe entsprechen vielfach nicht den Anforderungen, die an Hörgeräteschalen oder Ohrpassstücke gestellt werden. So sind die für das stereolithografische Herstellungsverfahren geeigneten Kunststoffe in aller Regel sehr hart, so dass die mit diesem Kunststoff hergestellten Hörgeräte oder Ohrpassstücke den Hörgeräteträger beispielsweise beim Kauen deutlich stören würden.

Die Aufgabe der vorliegenden Erfindung besteht darin, für den Hörgeräteträger komfortabler zu tragende Hörgeräte oder Ohrpassstücke herzustellen.

Erfindungsgemäß wird diese Aufgabe gelöst durch ein Verfahren zur Herstellung einer Hörhilfekomponente durch Bereitstellen von CAD-Daten von der dreidimensionalen Form der Hörhilfekomponente, Bilden von Negativdaten zu der Form der Hörhilfekomponente, Ausformen eines Negativs der Hörhilfekomponente aus den Negativdaten und Gießen der Hörhilfekomponente mit Hilfe des Negativs.

Dementsprechend wird erfindungsgemäß eine Gussform zur Herstellung einer Hörhilfekomponente bereitgestellt, die durch ein Rapid-Prototyping-Verfahren hergestellt ist. Damit kann eine erfindungsgemäße Hörhilfekomponente beispielsweise aus einem elastischen, angenehm zu tragenden, hautverträglichen Kunststoff gegossen werden.

Entsprechend der vorliegenden Erfindung wird somit nicht das gewünschte Ohrstück bzw. die gewünschte Hörgeräteschale aus den CAD-Daten hergestellt, sondern ein Negativ, das anschließend als Spritzgussform verwendet werden kann. Folglich kann eine Vielzahl von Materialien für das Endprodukt zum Einsatz kommen, auch wenn diese nicht für das Herstellungsverfahren des Negativs geeignet sind.

Das Ausformen erfolgt vorzugsweise auf der Basis der Technologie des Rapid-Prototyping. Insbesondere kann ein stereolithographisches Verfahren zur Herstellung des Negativs direkt aus den CAD-Daten herangezogen werden. Damit können sehr exakte Verfahren zur Herstellung der Hörgeräteschalen bzw. Ohrpassstücke eingesetzt werden, ohne auf die für diese Verfahren zu verwendende Materialien beschränkt zu sein.

Eine Gussform, die durch Rapid-Prototyping-Verfahren, wie z. B. das stereolithographische Verfahren, hergestellt ist, zeichnet sich durch die typischen Kanten der einzelnen Schichten aus, die sukzessive übereinander ausgebildet werden. Dementsprechend besitzt auch eine Hörhilfekomponente, die mit einer solchen Gussform hergestellt wurde, die entsprechende, typische Oberflächenstruktur im Rohzustand nach dem Gießen. Im Übrigen besitzt die Hörhilfekomponente den charakteristischen Schichtaufbau.

Die vorliegende Erfindung wird nun anhand der beigefügten Zeichnungen näher erläutert, in denen zeigen:
- FIG 1: ein dreidimensionales Modell eines Gehörgangs;
- FIG 2: ein Computermodell eines gewünschten Ohrpassstücks;
- FIG 3: ein Gusswerkzeug zur Herstellung des Ohrpassstücks gemäß FIG 2;
- FIG 4: den Einspritzvorgang in die Gussform von FIG 3; und
- FIG 5: das durch Spritzguss hergestellte Ohrpassstück.

Das nachfolgend näher geschilderte Ausführungsbeispiel stellt eine bevorzugte Ausführungsform der vorliegenden Erfindung dar.

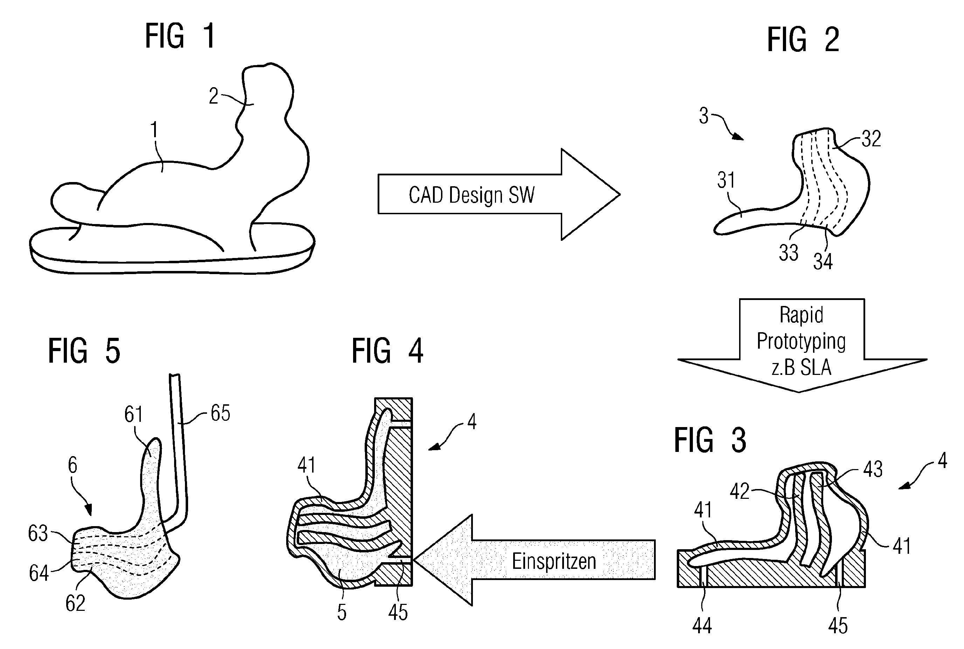

Entsprechend FIG 1 werden die dreidimensionalen Daten eines Stücks eines Ohrraums eines Patienten durch eines der Eingangs erwähnten Verfahren aufgenommen. Im vorliegenden Beispiel ist ein Concharaum 1 und ein Gehörgangsraum 2 erkennbar. Die folgenden FIG 2 bis 5 zeigen nun in einer kreisförmigen Anordnung im Uhrzeigersinn den Herstellungsprozess des gewünschten Ohrpassstücks, das in FIG 5 wiedergegeben ist. Zunächst wird hierzu aus den dreidimensionalen Daten von FIG 1 durch eine CAD-Design-Software ein Computermodell des gewünschten Ohrpassstücks, und zwar ein Positiv 3 entsprechend FIG 2 erstellt. Dieses Positiv 3 besitzt hier einen Conchaabschnitt 31 und einen Gehörgangsabschnitt 32. Im Inneren des als Positiv 3 wiedergegebenen Computermodells sind ein Schallkanal 33 und ein Belüftungskanal 34 berücksichtigt.

Aus dem Positiv 3 von FIG 2, das als Computerdatenmodell vorliegt, wird nun ein Negativ errechnet und aus diesem Negativ (nicht dargestellt) unmittelbar eine Gussform 4 hergestellt, wie sie in FIG 3 schematisch wiedergegeben ist. Die Herstellung der Gussform 4 erfolgt durch eine Rapid-Prototyping-Methode, wie beispielsweise ein stereolithographisches Verfahren (SLA). Die Gussform 4 besitzt einen Außenkonturabschnitt 41, ein Schallkanalformteil 42 und ein Lüftungsbohrungsformteil 43. Letztere dienen zur Formung des Schallkanals 33 und der Lüftungsbohrung 34 aus FIG 2. Außerdem besitzt die Gussform 4 Einspritz- bzw. Auslasskanäle 44 und 45.

Mit der Gussform 4 erfolgt das Spritzgießen entsprechend der Prinzipskizze von FIG 4. Dabei wird ein Kunststoff 5, der hautverträglich und elastisch ist, in die Einspritzöffnung 45 eingespritzt.

Nach dem Erstarren wird das fertige Produkt 6, wie es in FIG 5 dargestellt ist, aus der Gussform 4 entnommen. Das fertige Produkt 6 entspricht exakt dem Computermodell 3 von FIG 2. Es weist einen Conchaabschnitt 61 und einen Gehörgangsabschnitt 62 auf. Außerdem sind ein Schalldurchgang 63 und ein Belüftungskanal 64 im Ohrpassstück ausgebildet. Ferner ist FIG 5 zu entnehmen, dass in den Schallkanal 63 nach dem Gießen des Ohrpassstücks ein Schallschlauch 65 eingesteckt wurde.

Bei der Herstellung des Ohrpassstücks entsprechend den FIG 1 bis 5 wird somit auf erfindungsgemäße Art direkt aus den CAD-Daten des gewünschten Ohrstücks eine als Spritzgussform geeignete Negativform errechnet. Diese aus Daten bestehende Negativform lässt nun durch ein exaktes Prototyping-Verfahren unmittelbar in eine körperliche Spritzgussform umsetzen. Für das Spritzgießen können nun beliebige spritzfähige Materialien verwendet werden, die den Tragekomfort eines Hörgeräts bzw. Ohrpassstücks deutlich erhöhen.

## Patentansprüche

1. Verfahren zur Herstellung einer Hörhilfekomponente durch
- Bereitstellen von CAD-Daten von der dreidimensionalen Form (3) der Hörhilfekomponente,
**gekennzeichnet durch**
- Bilden von Negativdaten zu der Form (3) der Hörhilfekomponente,
- Ausformen eines Negativs (4) der Hörhilfekomponente aus den Negativdaten und
- Gießen der Hörhilfekomponente (6) mit Hilfe des Negativs (4).

2. Verfahren nach Anspruch 1, wobei das Ausformen nach einer Rapid-Prototyping-Methode erfolgt.

3. Verfahren nach Anspruch 2, wobei als Rapid Prototyping ein stereolithographisches Verfahren herangezogen wird.

4. Gussform (4) zur Herstellung einer Hörhilfekomponente (6)
**dadurch gekennzeichnet, dass**
sie durch ein Rapid-Prototyping-Verfahren hergestellt ist.

5. Gussform (4) nach Anspruch 4, die durch ein stereolithographisches Verfahren hergestellt ist.

6. Hörhilfekomponente (6),
**dadurch gekennzeichnet, dass**
sie/er mit einer Gussform (4) nach Anspruch 4 oder 5 gegossen ist.
